(19) **Europäisches Patentamt / European Patent Office / Office européen des brevets**

(11) **EP 1 811 702 A1**

(12) # EUROPEAN PATENT APPLICATION
published in accordance with Art. 158(3) EPC

(43) Date of publication:
**25.07.2007 Bulletin 2007/30**

(51) Int Cl.:
*H04J 13/00* (2006.01)  *H04B 7/26* (2006.01)
*H04L 12/28* (2006.01)  *H04L 29/06* (2006.01)
*H04Q 7/38* (2006.01)

(21) Application number: **05793441.6**

(22) Date of filing: **17.10.2005**

(86) International application number:
**PCT/JP2005/019017**

(87) International publication number:
**WO 2006/041181 (20.04.2006 Gazette 2006/16)**

(84) Designated Contracting States:
**DE GB**

(30) Priority: **15.10.2004 JP 2004302294**

(71) Applicants:
• **NTT DoCoMo Inc.**
  **Chiyoda-Ku**
  **Tokyo 100-6150 (JP)**
• **Panasonic Mobile Communications Co., Ltd.**
  **Yokohama-shi**
  **Kanagawa 224-8539 (JP)**

(72) Inventors:
• **ISHII, Hiroyuki**
  **IP Dep. NTT DoCoMo, Inc.**
  **Chiyoda-ku, Tokyo 100-6150 (JP)**
• **HANAKI, Akihito**
  **IP Dep. NTT DoCoMo, Inc.**
  **Chiyoda-ku, Tokyo 100-6150 (JP)**
• **NAKAMURA, Takehiro**
  **IP Dep. NTT DoCoMo, Inc.**
  **Chiyoda-ku, Tokyo 100-6150 (JP)**
• **HAGIWARA, Yuichi**
  **IP Dep. NTT DoCoMo, Inc.**
  **Chiyoda-ku, Tokyo 100-6150 (JP)**

(74) Representative: **HOFFMANN EITLE**
  **Patent- und Rechtsanwälte**
  **Arabellastraße 4**
  **D-81925 München (DE)**

(54) **PACKET TRANSMISSION CONTROL APPARATUS AND PACKET TRANSMISSION CONTROL METHOD**

(57) A packet transmission control apparatus comprising a storage unit configured to store a transmission resource usable for transmission of the packet, channel quality information on the downlink, and a transmission method used for transmission of the packet in association with each other; a determination unit configured to determine the transmission method used for transmission of the packet with reference to the storage unit based on the channel quality information on the downlink reported from a mobile station and the transmission resource usable for transmission of the packet; a redetermination unit configured to redetermine the transmission method used for transmission of the packet so as to minimize a padding portion in a transport block that forms the packet; and a packet transmission unit configured to transmit the packet with the redetermined transmission method.

FIG. 5

EP 1 811 702 A1

**Description**

TECHNICAL FIELD

The present invention relates to a packet transmission control apparatus and a packet transmission control method for controlling transmission of downlink packets to a plurality of mobile stations.

BACKGROUND ART

There has heretofore been known a mobile communication system in which a radio base station controls transmission of downlink packets by adaptively changing a transmission method of the downlink packets (for example, a transmission format and the like, such as a modulation scheme and a coding rate) according to a radio state of a downlink in communication with a mobile station belonging to the radio base station. Such a control scheme is called an adaptive modulation and coding (AMC) scheme.

In the mobile communication system to which the AMC scheme is applied, the mobile station is configured to monitor the radio state of the downlink, and to notify the radio base station of the monitored radio state of the downlink by using an uplink. Here, the radio state of the downlink includes an SIR, a CIR, received power and the like.

Moreover, the radio base station is configured to determine the transmission method of the downlink packets (for example, the transmission format and the like, such as the modulation scheme and the coding rate), on the basis of the radio state of the downlink which is notified by the mobile station, and also on the basis of transmission resources (radio resources) usable for transmission of the downlink packets, and thereby to transmit the downlink packets with the determined transmission method.

In this case, the mobile communication system to which the AMC scheme is applied is configured to transmit the downlink packets with a transmission method which enables communication at a higher transmission rate, when the radio state of the downlink allows the radio base station to communicate with the mobile station, in other words, when the radio state of the downlink is in good conditions such as the case where the mobile station is positioned near the radio base station or where the mobile station moves slowly.

Meanwhile, the mobile communication system to which the AMC scheme is applied is configured to transmit the downlink packets with a transmission method which enables communication at a lower transmission rate, when the radio state of the downlink is in poor conditions such as the case where the mobile station is positioned at a cell edge or where the mobile station moves fast.

Thus, the mobile communication system to which the AMC scheme is applied enables efficient communication in response to a change in a propagation environment.

Meanwhile, the standardization of the third-generation mobile communication system, what is termed "IMT-2000," has been in progress in 3GPP/3GPP2 (Third-Generation Partnership Project/ Third-Generation Partnership Project 2) which are organized by a regional standardization organization and the like. The 3GPP is developing the standard specifications of the "W-CDMA scheme," and the 3GPP2 is developing standard specifications of the "cdma 2000 scheme."

The 3GPP is standardizing a high speed downlink packet access (HSDPA) scheme, which is a high-speed downward packet transmission scheme, based on a prediction that high-speed and high-capacity traffic used for downloads and the like from databases and Web sites, particularly in a downlink, would increase along with the recent rapid spread of the Internet.

Moreover, from the same point of view, the 3GPP2 is also standardizing high-speed downward packet transmission scheme "1x-EV DO." Note that, in "1x-EV DO" of the cdma 2000 scheme, "DO" stands for "Data Only."

For example, in the HSDPA scheme, the AMC scheme is used for controlling a modulation scheme and a coding rate for a radio channel thereof according to a radio state between a mobile station and a radio base station. Here, the mobile station is configured to notify the radio base station of a radio state of a downlink by transmitting control information (radio state information) called a channel quality indicator (CQI) through an uplink. Note that the CQI is mapped into a dedicated physical control channel (HS-DPCCH) for the HSDPA on the uplink.

Moreover, the mobile station is configured to calculate the CQI described above, based on an SIR figured out from a common pilot channel (CPICH) of the downlink. For example, the mobile station is configured to calculate the CQI so as to set an error rate of the received packet to 10%.

Moreover, the radio base station is configured to transmit a high speed-downlink shared channel (HS-DSCH) with a certain transmission format determined on the basis of the CQI reported from the mobile station or a certain transmission format having required SIR equal to that of the transmission format.

Here, the transmission format includes a transport block size, a modulation scheme, a code resource amount, a power resource amount and the like, which are used for transmission of packets on the HS-DSCH.

Meanwhile, in the HSDPA scheme, a packet is formed of one transport block. Note that a size of the transport block is equal to a transport block size.

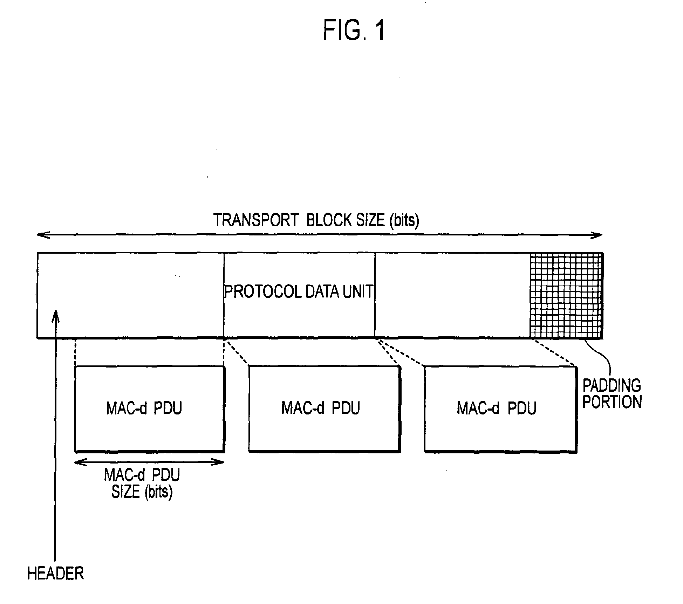

Furthermore, as shown in Fig. 1, the transport block includes a protocol data unit called "MAC-d PDU" and a header.

Here, the following information and the like are attached to the header. Specifically, attached are a queue ID for allowing a priority queue of the radio base station side and a reordering queue of the mobile station side to correspond to each other one-to-one, a size of the "MAC-d PDU" and the number thereof used for separating a plurality of the "MAC-d PDUs" from each other.

Moreover, the transport block size is defined as follows for each number of codes (code resource amount) and each modulation scheme (QPSK or 16QAM), which are used for transmission of packets, with a "TFRI" that is an integer from 0 to 62.

The transport block size, when kt= (TFRI) + $k_{o,i}$, is set to "L(kt)."

Here, when $k_t<40$, the transport block size is calculated by $L(k_t)= 125+12 \cdot k_t$.

Meanwhile, when kt>40, the transport block size is calculated by the following formulae.

$$L(k_t) = [\, L_{min} \cdot P^{k_t}\,]$$

$$P = 2085/2048$$

$$L_{min} = 296$$

Note that $k_{o,i}$ is given as described below.

| MODURATION SCHEMA | CODE NUMBER | $K_{o,i}$ |
|---|---|---|
| QPSK | 1 | 1 |
| | 2 | 40 |
| | 3 | 63 |
| | 4 | 79 |
| | 5 | 92 |
| | 6 | 102 |
| | 7 | 111 |
| | 8 | 118 |
| | 9 | 125 |
| | 10 | 131 |
| | 11 | 136 |
| | 12 | 141 |
| | 13 | 145 |
| | 14 | 150 |
| | 15 | 153 |
| 16QAM | 1 | 40 |
| | 2 | 79 |
| | 3 | 102 |
| | 4 | 118 |

(continued)

| MODURATION SCHEMA | CODE NUMBER | $K_{o,i}$ |
|---|---|---|
| | 5 | 131 |
| | 6 | 141 |
| | 7 | 150 |
| | 8 | 157 |
| | 9 | 164 |
| | 10 | 169 |
| | 11 | 175 |
| | 12 | 180 |
| | 13 | 184 |
| | 14 | 188 |
| | 15 | 192 |

Moreover, the number of "MAC-d PDUs" described above is an integer. Meanwhile, the number of the transport block sizes that can be signaled by the radio base station to the mobile station is only 254, and this may generate a space in the transport block. Accordingly, in order to fill up the space, it is required to pack data having no meaning therein.

For example, in the example of Fig. 1, the header and three "MAC-d PDUs" are contained in one transport block, and, it is required to pack data having no meaning in a remaining space. As described above, packing of data having no meaning is called "padding," and a portion packed with the data having no meaning is called a "padding portion."

However, in a physical layer, communication is performed with both of the padding portion and the "MAC-d PDU" (a significant data portion) as significant information without distinguishing between the two. Thus, extra power resources and code resources are required for the padding portion. As a result, there is a problem that a system capacity is reduced.

DISCLOSURE OF INVENTION

The present invention has been made in the light of the foregoing problems. An object of the present invention is to provide a packet transmission control apparatus and a packet transmission control method, which enable transmission of downlink packets by efficiently utilizing transmission resources (radio resources).

A first aspect of the present invention is summarized as a packet transmission control apparatus for controlling transmission of a packet of a downlink to a plurality of mobile stations. The packet transmission control apparatus includes: a storage unit configured to store a transmission resource usable for transmission of the packet, channel quality information on the downlink, and a transmission method used for transmission of the packet in association with each other; a determination unit configured to determine the transmission method used for transmission of the packet with reference to the storage unit based on the channel quality information on the downlink reported from a mobile station and the transmission resource usable for transmission of the packet; a redetermination unit configured to redetermine the transmission method used for transmission of the packet so as to minimize a padding portion in a transport block that forms the packet; and a packet transmission unit configured to transmit the packet with the redetermined transmission method.

In the first aspect of the present invention, the determination unit may be configured to determine, as the transmission method, a transport block size used for transmission of the packet, and the redetermination unit may be configured to reduce the transport block size determined by the determination unit until the padding portion in the transport block is minimized.

In the first aspect of the present invention, the determination unit may be configured to determine, as the transmission method, a modulation scheme used for transmission of the packet, and the redetermination unit may be configured to change the modulation scheme from a 16QAM scheme to a QPSK scheme in the case where the modulation scheme determined by the determination unit is the 16QAM scheme and at the same time, in the case where a coding rate becomes smaller than a predetermined value when the transport block size is reduced.

In the first aspect of the present invention, the determination unit may be configured to determine, as the transmission method, a transport block size, a modulation scheme and a code resource amount, which are used for transmission of the packet, and the redetermination unit may be configured to reduce the code resource amount in the case where the modulation scheme determined by the determination unit is a QPSK scheme and at the same time, in the case where the transport block size determined by the determination unit is the same as a transmittable minimum transport block size with the code resource amount determined by the determination unit.

In the first aspect of the present invention, the packet transmission control apparatus may be configured to include a power resource changing unit configured to change a power resource used for transmission of the packet, in accordance with the transmission method determined by the determination unit and with the transmission method redetermined by the redetermination unit.

A second aspect of the present invention is summarized as a packet transmission control method for controlling transmission of a packet of a downlink to a plurality of mobile stations, including the steps of: storing a transmission resource usable for transmission of the packet, channel quality information on the downlink, and a transmission method used for transmission of the packet in association with each other; determining the transmission method used for transmission of the packet with reference to the storage unit, based on the channel quality information on the downlink reported from a mobile station and the transmission resource usable for transmission of the packet; redetermining the transmission method used for transmission of the packet so as to minimize a padding portion in a transport block that forms the packet; and transmitting the packet with the redetermined transmission method.

BRIEF DESCRIPTION OF THE DRAWINGS

Fig. 1 is a diagram showing a configuration of a packet in a mobile communication system to which an HSDPA scheme is applied.

Fig. 2 is a schematic diagram showing the entire mobile communication system according to an embodiment of the present invention.

Fig. 3 is a functional block diagram of a radio base station in the mobile communication system according to the embodiment of the present invention.

Fig. 4 is a functional block diagram of a baseband signal processing unit in the radio base station in the mobile communication system according to the embodiment of the present invention.

Fig. 5 is a functional block diagram of a MAC-hs processing unit in the baseband signal processing unit in the radio base station in the mobile communication system according to a first embodiment of the present invention.

Fig. 6 is a diagram showing an example of a stop-and-wait protocol operation performed by an H-ARQ control unit in the MAC-hs processing unit in the baseband signal processing unit in the radio base station in the mobile communication system according to the first embodiment of the present invention.

Figs. 7 (a) and 7 (b) are diagrams showing examples of a transmission format reference table retained by a transmission format reference table retention unit in the MAC-hs processing unit in the baseband signal processing unit in the radio base station in the mobile communication system according to the first embodiment of the present invention.

Fig. 8 is a flowchart showing an operation of determining a downlink packet transmission method by a TFR selection unit in the MAC-hs processing unit in the baseband signal processing unit in the radio base station in the mobile communication system according to the first embodiment of the present invention.

Fig. 9 is a flowchart showing an operation of redetermining a downlink packet transmission method by a TBS reselection unit in the MAC-hs processing unit in the baseband signal processing unit in the radio base station in the mobile communication system according to the first embodiment of the present invention.

Fig. 10 is a functional block diagram of a MAC-hs processing unit in a baseband signal processing unit in a radio base station in a mobile communication system according to modified example 1 of the present invention.

BEST MODE FOR CARRYING OUT THE INVENTION

(Configuration of Mobile Communication System According to First Embodiment of the Invention)

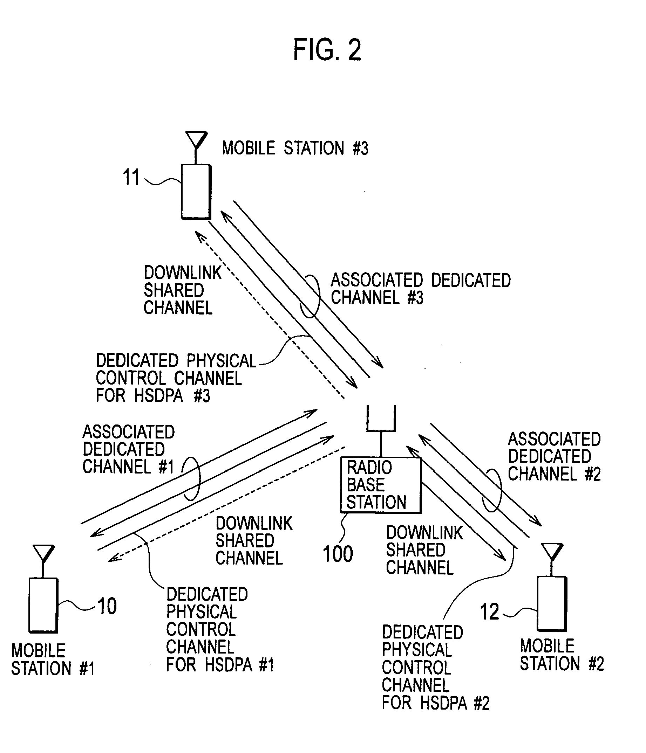

With reference to Figs. 2 to 7, a configuration of a mobile communication system according to a first embodiment of the present invention will be described. Fig. 2 is a diagram showing a configuration example of the mobile communication system, to which a packet transmission control method is applied, according to the first embodiment of the present invention.

As shown in Fig. 2, the mobile communication system according to this embodiment includes a radio base station 100 and a plurality of mobile stations (#1 to #3) 10 to 12. Moreover, the HSDPA scheme is applied to the mobile communication system according to this embodiment.

On downlinks in the HSDPA scheme, a downlink shared channel, such as a downlink shared channel HS-DSCH and a downlink shared control channel HS-SCCH (Shared Control Channel), which is shared among the mobile stations (#1 to #3) 10 to 12, associated dedicated channels #1 to #3 (two-way channels) associated with physical channels individually allocated to the mobile stations (#1 to #3) 10 to 12, and the like are used. Note that, in the example shown in Fig. 2, since the downlink shared channel to the mobile station #2 is indicated by a solid line, the downlink shared channel is assumed to be allocated to the mobile station #2.

Through uplink associated dedicated channels #1 to #3, a pilot symbol and a power control command (TPC command) for transmitting downlink associated dedicated channels are transmitted in addition to user data.

Meanwhile, a transmission power control command for transmitting the uplink associated dedicated channels, and the like are transmitted, through the downlink associated dedicated channels #1 to #3.

Moreover, on the uplinks, dedicated physical control channels (HS-DPCCH) for the HSDPA are used in addition to the associated dedicated channels. Note that, through the dedicated physical control channels (HS-DPCCH) for the HSDPA, scheduling processing of the shared channels, channel quality information (CQI) on the downlink used in the AMC scheme, delivery acknowledgement information (ACK/NACK) for reporting delivery acknowledgement in H-ARQ (Hybrid-ARQ) control, and the like are transmitted.

In this embodiment, the respective mobile stations (#1 to #3) 10 to 12 have the same configuration and functions. Moreover, in this embodiment, the radio base station is required to determine a transmission method (a transmission format and transmission resources) of downlink packets for each of the plurality of mobile stations. Therefore, a mobile station N arbitrarily selected from the plurality of mobile stations will be described below, unless otherwise noted.

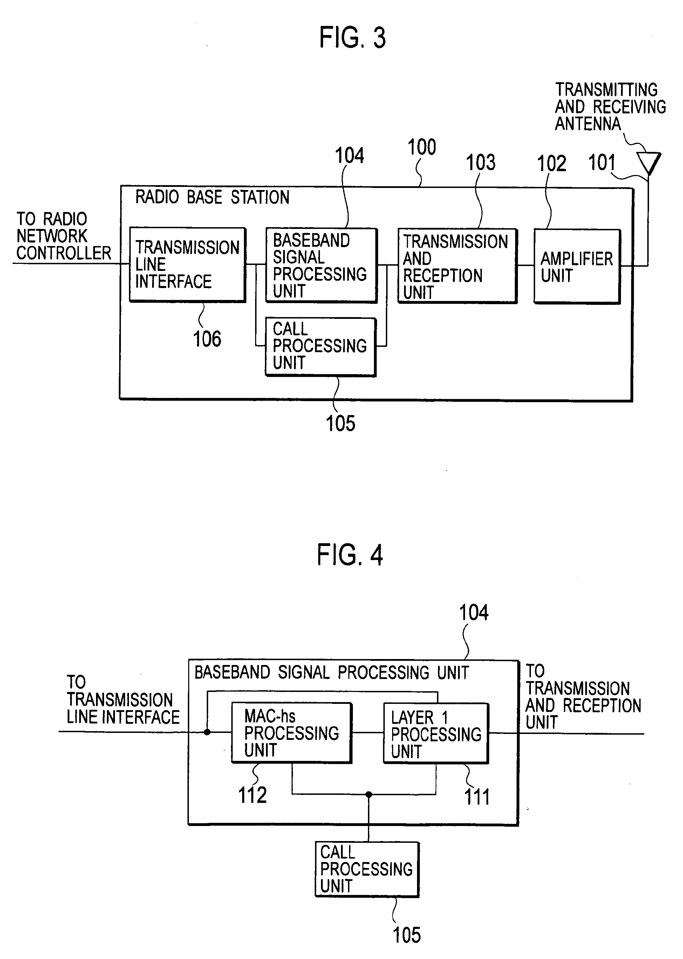

Fig. 3 is a functional block diagram showing a configuration example of the radio base station 100 according to this embodiment. As shown in Fig. 3, the radio base station 100 according to this embodiment includes a transmitting and receiving antenna 101, an amplifier unit 102, a transmission and reception unit 103, a baseband signal processing unit 104, a call processing unit 105 and a transmission line interface 106.

The transmitting and receiving antenna 101 transmits and receives radio frequency signals to and from the plurality of mobile stations (#1 to #3) 10 to 12.

The amplifier unit 102 amplifies an uplink radio frequency signal received by the transmitting and receiving antenna 101 and outputs the signal to the transmission and reception unit 103. Moreover, the amplifier unit 102 amplifies a downlink radio frequency signal outputted from the transmission and reception unit 103 and outputs the signal to the transmitting and receiving antenna 101.

The transmission and reception unit 103 provides a baseband signal, outputted from the baseband signal processing unit 104, with frequency conversion processing for converting the baseband signal into a radio frequency signal, and outputs the radio frequency signal to the amplifier unit 102. Moreover, the transmission and reception unit 103 provides a radio frequency signal, outputted from the amplifier unit 102, with frequency conversion processing for converting the radio frequency signal into a baseband signal, and then outputs the baseband signal to the baseband signal processing unit 104.

The baseband signal processing unit 104 generates a baseband signal by providing a downlink packet, outputted from the transmission line interface 106, with retransmission control (H-ARQ control) processing, scheduling processing, transmission method determination processing, channel coding processing, spreading processing and the like, and then outputs the generated baseband signal to the transmission and reception unit 103.

Moreover, the baseband signal processing unit 104 provides a baseband signal, outputted from the transmission and reception unit 103, with despreading processing, RAKE combining processing, error correction decoding processing and the like, and then outputs the signal to the transmission line interface 106.

Here, the baseband signal includes channel quality information (CQI) on each mobile station, which is used for MAC-hs (Media Access Control-HSDPA) processing that will be described later, delivery acknowledgement information (ACK/NACK/DTX) in H-ARQ processing, and the like. As described later, the information described above is decoded by a layer 1 processing unit 111 in the baseband signal processing unit 104 and is used by a MAC-hs processing unit 112 in the baseband signal processing unit 104.

The call processing unit 105 controls a state of the radio base station 100 and allocates resources by transmitting and receiving, through the transmission line interface 106, a call processing control signal to and from a radio controller positioned above the radio base station 100. The transmission line interface 106 transmits and receives information to and from the radio controller.

With reference to Fig. 4, a configuration of the baseband signal processing unit 104 described above will be described in detail. As shown in Fig. 4, the baseband signal processing unit 104 includes the layer 1 processing unit 111 and the MAC-hs processing unit 112. Note that each of the layer 1 processing unit 111 and the MAC-hs processing unit 112 is connected to the call processing unit 105.

The layer 1 processing unit 111 is configured to provide downlink channel coding processing, uplink channel decoding processing, transmission power control processing for uplink and downlink dedicated physical control channels, the RAKE combining processing, and spreading and despreading processing.

Moreover, the layer 1 processing unit 111 is configured to receive information (channel quality information CQI) indicating a radio state of the downlink, which is reported with the uplink dedicated physical channel (HS-DPCCH) from each of the mobile stations, and the delivery acknowledgement information (ACK/NACK/DTX) in the H-ARQ control and then to output the information to the MAC-hs processing unit 112.

The MAC-hs processing unit 112 is configured to provide H-ARQ control processing for the downlink shared channel in the HSDPA scheme, scheduling processing for packets waiting for transmission, and determination processing of a transmission method (a transmission format and transmission resources) used for transmission of downlink packets.

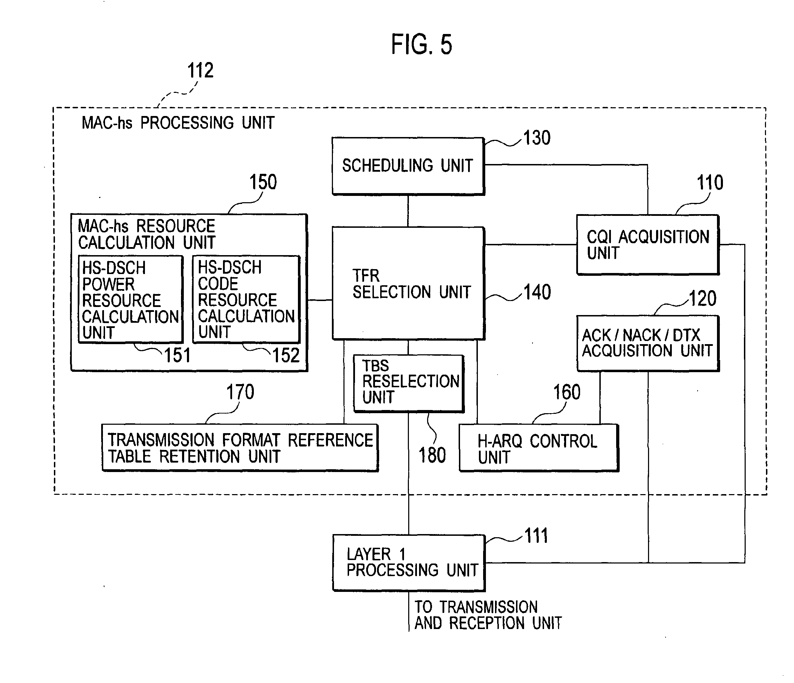

With reference to Fig. 5, a configuration of the MAC-hs processing unit 112 mentioned above will be described in detail. As shown in Fig. 5, the MAC-hs processing unit 112 includes a CQI acquisition unit 110, a ACK/NACK/DTX acquisition unit 120, a scheduling unit 130, a TFR (Transport Format Resource) selection unit 140, a MAC-hs resource calculation unit 150, a H-ARQ control unit 160, a transmission format reference table retention unit 170 and a TBS (Transport Block Size) reselection unit 180.

Note that the MAC-hs processing unit 112 includes various functions, such as a function of executing a flow control, besides the functions described above. However, since the various functions are not directly related to the present invention, description and explanation thereof will be omitted.

The CQI acquisition unit 110 is configured to acquire the channel quality information (CQI) decoded by the layer 1 processing unit 111 and then to output the information to the scheduling unit 130 and the TFR selection unit 140.

The ACK/NACK/DTX acquisition unit 120 is configured to acquire the delivery acknowledgement information (ACK/NACK/DTX) in the H-ARQ control, which is decoded by the layer 1 processing unit 111, and then to output the information to the H-ARQ control unit 160.

The scheduling unit 130 is configured to determine a mobile station to which the HS-DSCH is to be allocated (a mobile station to which a downlink packet is to be transmitted) in each TTI (Transmission Time Interval) with an arbitrary scheduling algorithm, and then to notify the TFR selection unit 140 of a mobile station ID for identifying the mobile station described above.

Here, in the case where scheduling is done so as to transmit the downlink packets to the plurality of mobile stations in the TTI, the scheduling unit 130 is configured to notify the TFR selection unit 140 of a plurality of mobile station IDs having priority information added thereto.

The TFR selection unit 140 is configured to receive from the CQI acquisition unit 110 the CQI (channel quality information on the downlink) reported from each of the mobile stations, to receive retransmission information from the H-ARQ control unit 160, and to receive radio resource information from the MAC-hs resource calculation unit 150. Here, the retransmission information is a piece of information indicating whether the packet to be transmitted in the TTI is in a first transmission in the H-ARQ control or in a retransmission. Moreover, the radio resource information is a piece of information indicating transmission resources (a code resource amount and a power resource amount) which can be used for transmission of the packets in the TTI.

Moreover, the TFR selection unit 140 is connected to the transmission format reference table retention unit 170 and is configured to determine a transmission method (a transmission format and transmission resources) used for transmission of the packet (HS-DSCH) with reference to a transmission format reference table retained in the transmission format reference table retention unit 170 based on the received CQI and radio resource information.

Here, the TFR selection unit 140 determines, as the transmission method, a transport block size used for transmission of the packet, a modulation scheme used for transmission of the packet, a code resource amount used for transmission of the packet, a power resource amount used for transmission of the packet, and the like.

Moreover, the determination processing of the transmission method (the transmission format and the transmission resources) by the TFR selection unit 140 will be described in detail later.

The MAC-hs resource calculation unit 150 includes a HS-DSCH power resource calculation unit 151 and a HS-DSCH code resource calculation unit 152. The MAC-hs resource calculation unit 150 calculates transmission resources (for example, radio resources such as power resources and code resources) available for transmission of the packet (HS-DSCH) by using the HS-DSCH power resource calculation unit 151, the HS-DSCH code resource calculation unit 152 and the like, and notifies the TFR selection unit 140 of the transmission resources (for example, the radio resources such as the power resources and the code resources) which can be used for transmission of the packet in the TTI.

Here, in the case where the downlink packets are transmitted to the plurality of mobile stations in the TTI, the TFR selection unit 140 sequentially determines the transmission format and the transmission resources from a high priority mobile station. Thus, the MAC-hs resource calculation unit 150 notifies the TFR selection unit 140 of the power resources and the code resources usable for the respective mobile stations, when the TFR selection unit 140 determines the transmission format and the transmission resources.

To be more specific, for a highest priority mobile station, the MAC-hs resource calculation unit 150 notifies the TFR selection unit 140 of the amounts of all the power resources and code resources which can be used in the TTI.

Moreover, for a second highest priority mobile station, the MAC-hs resource calculation unit 150 notifies the TFR selection unit 140 of values obtained by subtracting the amounts of power resources and code resources used in the highest priority mobile station from the amounts of all the power resources and code resources which can be used in the TTI, respectively, as the amounts of power resources and code resources which can be used in the second highest priority mobile station.

Moreover, also for a third highest priority mobile station and those subsequent thereto, the MAC-hs resource calculation unit 150 notifies the TFR selection unit 140 of values obtained by subtracting the amounts of power resources and code resources used in a mobile station having a priority higher than that of the relevant mobile station from the amounts of power resources and code resources which can be used in the TTI, respectively, as the amounts of power resources and code resources which can be used in the relevant mobile station, as in the case of the second highest priority mobile station.

As to respective data queues of the respective mobile stations, the H-ARQ control unit 160 is configured to perform H-ARQ retransmission control based on feedback of delivery acknowledgement information (Ack/Nack/DTX) on the uplink.

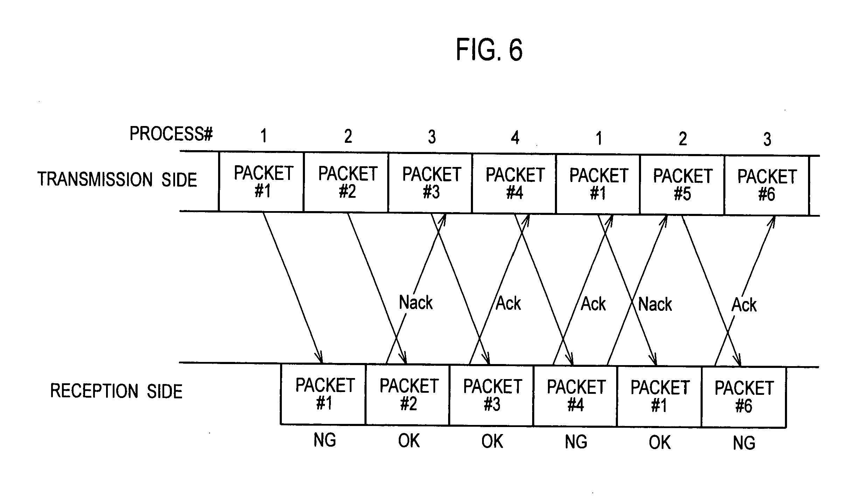

Fig. 6 shows an operation example of a stop-and-wait protocol performed by the H-ARQ control unit 160. In the stop-and-wait protocol (ARQ), a reception side (the mobile station side) is configured to send back the delivery acknowledgement information (Ack/Nack/DTX) with the HS-DPCCH upon receipt of a downlink packet from a transmission side (the radio base station side).

In the example of Fig. 6, the reception side cannot correctly receive a packet #1 and consequently sends a negative acknowledgement (Nack) back to the transmission side. Moreover, the reception side can correctly receive a packet #2 and consequently sends a positive acknowledgement (Ack) back to the transmission side. After the packet #2, the reception side repeats the operation of sending the positive acknowledgement (Ack) or the negative acknowledgement (Nack) back to the transmission side in the order of received packets.

Moreover, the H-ARQ control unit 160 notifies the TFR selection unit 140 of information (retransmission information) indicating whether the packet to be transmitted in the TTI is in a first transmission in the H-ARQ control or in a retransmission (transmission for the second time or more).

The transmission format reference table retention unit 170 retains a transmission format reference table in which the transmission resources usable for transmission of the packet, the channel quality information (CQI) on the downlink and the transmission method (the transmission format and the transmission resources) used for transmission of the packet are associated with each other.

To be more specific, the transmission format reference table is a table showing a relationship, for every code resource amount usable for transmission of a packet in the TTI, between the channel quality information (CQI) on the downlink, a transport block size used for transmission of the packet, the code resource amount used for transmission of the packet, a modulation scheme used for transmission of the packet, and a power offset of power resources used for transmission of the packet.

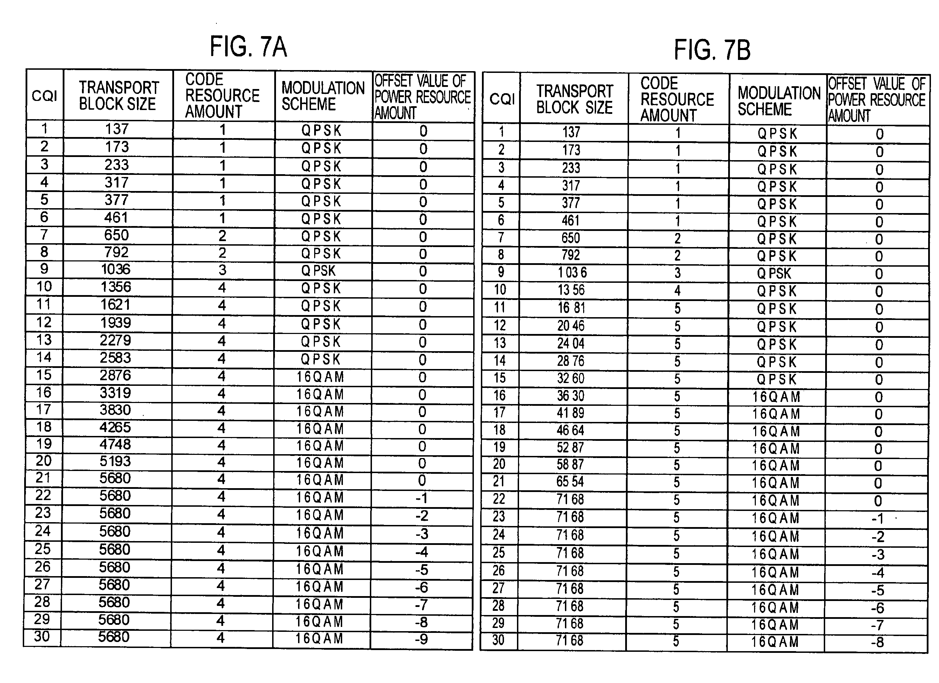

Figs. 7 (a) and 7 (b) show examples of the transmission format reference table.

Fig. 7 (a) shows a table in which the channel quality information (CQI) on the downlink, a transport block size used for transmission of the packet, a code resource amount used for transmission of the packet, a modulation scheme used for transmission of the packet, and a power offset of power resources used for transmission of the packet are associated with each other when the code resource amount that can be used for transmission of the packet in the TTI is "4."

Moreover, Fig. 7 (b) shows a table in which the channel quality information (CQI) on the downlink, a transport block size used for transmission of the packet, a code resource amount used for transmission of the packet, a modulation scheme used for transmission of the packet, and a power offset of power resources used for transmission of the packet are associated with each other when the code resource amount that can be used for transmission of the packet in the TTI is "5."

In reality, since the number of codes usable in the HS-PDSCH is "1 to 15," the transmission format reference table retention unit 170 retains 15 tables for every usable code resource amount.

In the case where arguments are the "code resource amount that can be used in the TTI" and the "CQI," the transmission format reference table retention unit 170 can output the transport block size used for transmission of the packet in the TTI to the TFR selection unit 140 through a function TF_Related_TBS (the code resource amount, the CQI).

Alternatively, in the case where the arguments are the "code resource amount that can be used in the TTI" and the "CQI," the transmission format reference table retention unit 170 can output the code resource amount used for transmission of the packet in the TTI to the TFR selection unit 140 through a function TF_Related_Code (the code resource amount, the CQI).

Alternatively, in the case where the arguments are the "code resource amount that can be used in the TTI" and the "CQI," the transmission format reference table retention unit 170 can output the modulation scheme used for transmission of the packet in the TTI to the TFR selection unit 140 through a function TF_Related_Mod (the code resource amount, the CQI).

Alternatively, in the case where the arguments are the "code resource amount that can be used in the TTI" and the "CQI," the transmission format reference table retention unit 170 can output an offset value of the power resource amount used for transmission of the packet in the TTI to the TFR selection unit 140 through a function TF_Related_ Offset (the code resource amount, the CQI).

Alternatively, in the case where the arguments are the "code resource amount that can be used in the TTI" and the "transport block size used in the TTI," the transmission format reference table retention unit 170 can output the CQI corresponding to the transmission method used for transmission of the packet in the TTI to the TFR selection unit 140 through a function TF_Related_CQI (the code resource amount, the transport block size).

Here, the "CQI corresponding to the transmission method used for transmission of the packet in the TTI" means "minimum CQI which enables transmission of the transport block size used for transmission of the packet in the TTI."

A concrete method for referring to the transmission format reference table will be described in detail below.

For example, in the case where the code resource amount that can be used in the TTI is "4" and the CQI is "15," the transmission format reference table retention unit 170 outputs the "transport block size TBS = 2876" through the function TF_Related_TBS (the code resource amount, the CQI) with reference to Fig. 7 (a).

Moreover, in the case where the code resource amount that can be used in the TTI is "5" and the CQI is "10," the transmission format reference table retention unit 170 outputs the "code resource amount used for transmission of the packet = 4" through the function TF_Related_Code (the code resource amount, the CQI) with reference to Fig. 7 (b).

Moreover, in the case where the code resource amount that can be used in the TTI is "4" and the CQI is "20," the transmission format reference table retention unit 170 outputs the "modulation scheme used for transmission of the packet = 16QAM" through the function TF_Related_Mod (the code resource amount, the CQI) with reference to Fig. 7 (a).

Furthermore, in the case where the code resource amount that can be used in the TTI is "5" and the CQI is "28," the transmission format reference table retention unit 170 outputs the "offset value of the power resource amount used for transmission of the packet = -6" through the function TF_Related_Offset (the code resource amount, the CQI) with reference to Fig. 7 (b).

Moreover, in the case where the code resource amount that can be used in the TTI is "4" and the transport block size is "4265," the transmission format reference table retention unit 170 outputs the "CQI corresponding to the transmission method used for transmission of the packet = 18" through the function TF_Related_CQI (the code resource amount, the transport block size) with reference to Fig. 7 (a).

Moreover, in the case where the transport block size is "4581," the transmission format reference table retention unit 170 determines that the "CQI = 19" is "minimum CQI which enables transmission of the transport block" through the function TF_Related_CQI (the code resource amount, the transport block size) with reference to Fig. 7 (a), and outputs the "CQI corresponding to the transmission method used for transmission of the packet = 19."

Note that, in the transmission format reference tables shown in Figs. 7 (a) and 7 (b), QPSK and 16QAM are mixed as the modulation scheme. However, the transmission format reference table retention unit 170 may be configured to retain transmission format reference tables including only the QPSK in order to support mobile stations having the ability to respond to only the QPSK.

The TBS reselection unit 180 acquires the transmission method (the transmission format and the transmission resources) determined by the TFR selection unit 140, and redetermines the transmission method (the transport block size) used for transmission of the packet so as to minimize a padding portion in the transport block which forms the packet to be transmitted. The redetermination processing of the transmission method will be described in detail later.

The TBS reselection unit 180 notifies the layer 1 processing unit 111 of the redetermined transport block size and the transmission method other than the transport block size.

To be more specific, the TBS reselection unit 180 is configured, as described later, to reduce the transport block size determined by the TFR selection unit 140 until the padding portion in the transport block is minimized.

Moreover, the TBS reselection unit 180 is configured, as described later, to change the modulation scheme from the 16QAM scheme to the QPSK scheme in the case where the modulation scheme determined by the TFR selection unit 140 is the 16QAM scheme and at the same time, in the case where a coding rate becomes smaller than a predetermined value when the transport block size is reduced.

Moreover, the TBS reselection unit 180 is configured, as described later, to reduce the code resource amount in the case where the modulation scheme determined by the TFR selection unit 140 is the QPSK scheme and at the same time, in the case where the transport block size determined by the TFR selection unit 140 is the same as the transmittable minimum transport block size with the code resource amount determined by the TFR selection unit 140.

As a result, in the TTI, the downlink packet is transmitted to a predetermined mobile station with the redetermined transmission method.

(Operations of Mobile Communication System According to First Embodiment of the Invention)

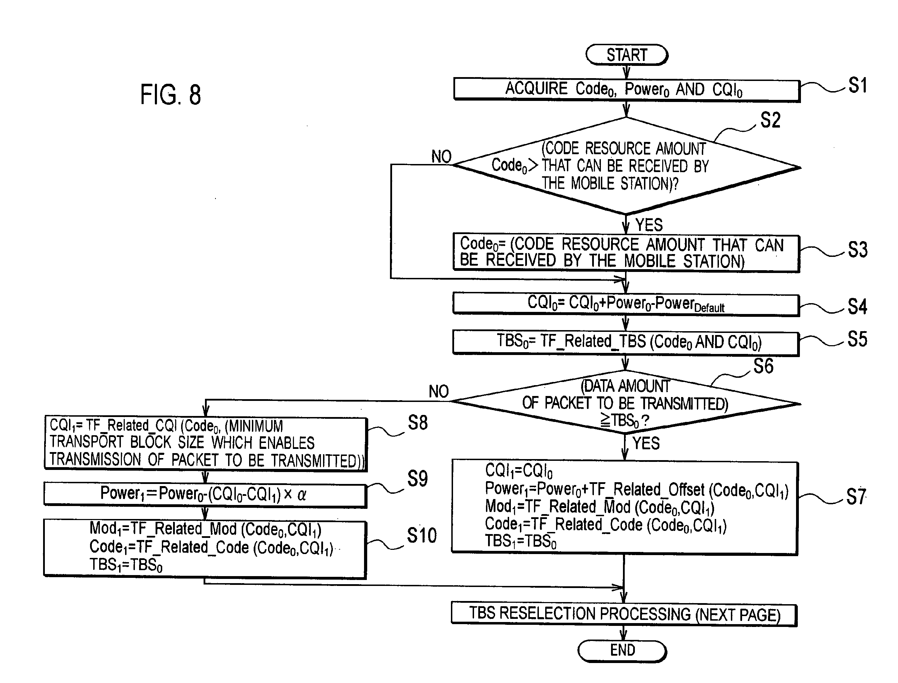

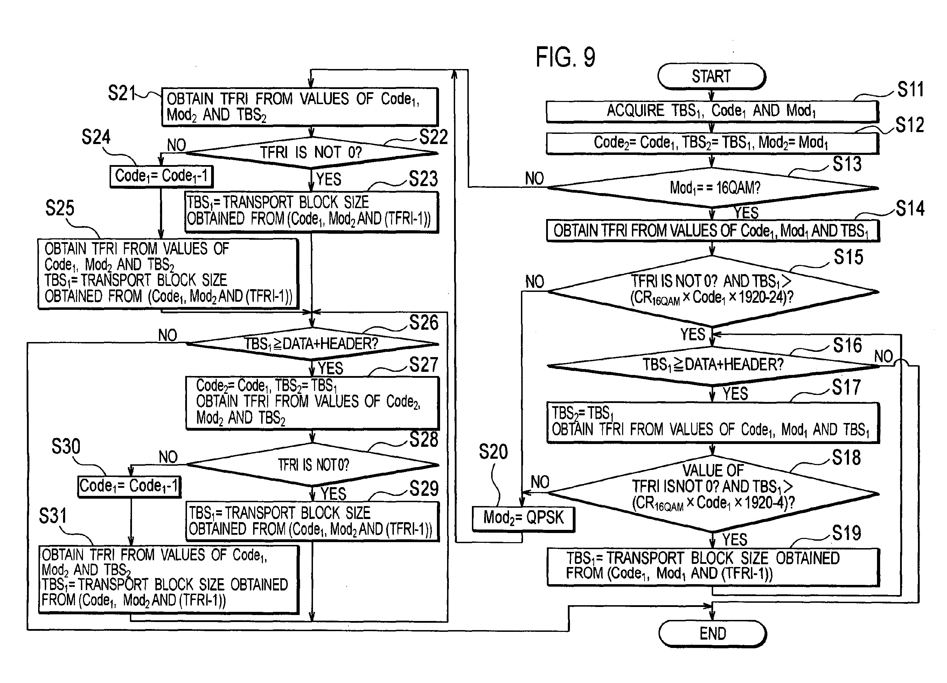

With reference to Figs. 8 and 9, description will be given of an operation of determining a transmission method (a transmission format and transmission resources) used for transmission of a packet in the TTI by the MAC-hs processing unit 112 in the mobile communication system according to this embodiment.

To be more specific, with reference to Fig. 8, description will be given of an operation of determining (selecting) the transmission method (the transmission format and the transmission resources) used for transmission of the packet in the TTI by the TFR selection unit 140. Moreover, with reference to Fig. 9, description will be given of an operation of redetermining (reselecting) the transmission method (the transmission format and the transmission resources) used for transmission of the packet in the TTI by the TBS reselection unit 180.

In this embodiment, only operations in a first transmission in the H-ARQ control will be described. Moreover, in this embodiment, description will be given of an operation of determining a transmission method (a transmission format and transmission resources) used for transmission of a downlink packet to a mobile station (hereinafter referred to as the mobile station) determined by the scheduling unit 130. Moreover, in this embodiment, when downlink packets are transmitted to a plurality of mobile stations in the TTI, the operation described above is applied sequentially from a high priority mobile station.

Here, among the transmission method (the transmission format and the transmission resources) determined by the TFR selection unit 140, the transport block size is set to "$TBS_1$," the code resource amount is set to "$Code_1$," the modulation scheme is set to "$Mod_1$," the power resource amount is set to "$Power_1$" and the CQI corresponding to the determined transmission method (the transmission format and the transmission resources) is set to "$CQI_1$."

Moreover, among the transmission method (the transmission format and the transmission resources) redetermined by the TBS reselection unit 180, the transport block size is set to "$TBS_2$," the code resource amount is set to "$Code_2$," the modulation scheme is set to "$Mod_2$" and the power resource amount is set to "$Power_2$". Note that, in this embodiment, since the TBS reselection unit 180 does not change the power resources, $Power_1 = Power_2$ is established.

Moreover, in this embodiment, the CQI and the power resource amount are calculated in a region of "dB".

As shown in Fig. 8, in Step S1, the TFR selection unit 140 acquires, from the CQI acquisition unit 110, CQI reported from each of the mobile stations. Moreover, the TFR selection unit 140 acquires a code resource amount and a power resource amount, which can be used in the TTI, from the MAC-hs resource calculation unit 150. Here, the acquired CQI is set to "$CQI_0$," the acquired code resource amount is set to "$Code_0$," and the acquired power resource amount is set to "$Power0$".

In Step S2, if "$Code_0$" is larger than a code resource amount that can be received by the mobile station, the operation advances to Step S3, and, if not, the operation advances to Step S4.

In Step S3, the TFR selection unit 140 sets the code resource amount that can be received by the mobile station to "$Code_0$".

The CQI is calculated by assuming that all transmission power of a downlink shared channel is "$Power_{Default}$" in the mobile station. Consequently, in Step S4, the TFR selection unit 140 substitutes "$CQI_0$" for a value based on "$Power0$". Specifically, the TFR selection unit 140 sets a value calculated by "$CQI_0 + Power_0 - Power_{Default}$" to "$CQI_0$".

In Step S5, the TFR selection unit 140 calculates a transport block size "$TBS_0$" that can be used in the TTI with reference to a transmission format reference table, based on the code resource amount "$Code_0$" that can be used in the TTI and the channel quality information "$CQI_0$" on the downlink.

To be more specific, the TFR selection unit 140 sets a transport block size outputted from the transmission format reference table retention unit 170 based on a function $TF\_Related\_TBS(Code_0, CQI_0)$ to the transport block size "$TBS_0$".

In Step S6, if a data amount of a packet to be transmitted to the mobile station in the TTI is larger than "$TBS_0$," the operation advances to Step S7, and, if not, the operation advances to Step S8.

In Step S7, the TFR selection unit 140 calculates a transmission method to be used for transmission of the packet in the TTI, with reference to the transmission format reference table, based on the power resource amount "$Power_0$" that can be used in the TTI and "$CQI_0$".

First, the TFR selection unit 140 calculates a power resource amount "$Power_1$" as a transmission method used for transmission of the packet in the TTI, with reference to the transmission format reference table, based on the power resource amount "$Power_0$" and the code resource amount "$Code_0$," which can be used in the TTI, and "$CQI_0$".

To be more specific, the TFR selection unit 140 calculates the power resource amount "$Power_1$" by using the following equation.

$$Power_1 = Power_0 + TF\_Related\_Offset(Code_0, CQI_0)$$

Secondly, the TFR selection unit 140 calculates a modulation scheme "$Mod_1$" and a code resource amount "$Code_1$" as the transmission method used for transmission of the packet in the TTI, with reference to the transmission format reference table, based on the code resource amount "$Code_0$" which can be used in the TTI and "$CQI_0$".

To be more specific, the TFR selection unit 140 calculates the modulation scheme "$Mod_1$" and the code resource

amount "Code$_1$" by using the following equations.

$$\text{Mod}_1 = \text{TF\_Related\_Mod (Code}_0, \text{ CQI}_0)$$

$$\text{Code}_1 = \text{TF\_Related\_Code (Code}_0, \text{ CQI}_0)$$

Third, the TFR selection unit 140 sets "TBS$_0$" to a transport block size "TBS$_1$" as the transmission method used for transmission of the packet in the TTI.

In Step S8, the TFR selection unit 140 calculates "CQI$_1$" that is minimum CQI which enables transmission of the packet to be transmitted, with reference to the transmission format reference table, based on the code resource amount that can be used in the TTI and a data amount (size) of the packet to be transmitted.

To be more specific, the TFR selection unit 140 calculates "CQI$_1$" that is the minimum CQI which enables transmission of the packet to be transmitted, by using the following equation.

$$\text{CQI}_1 = \text{TF\_Related\_CQI (Code}_0, \text{ minimum transport block size which}$$
$$\text{enables transmission of the packet to be transmitted)}$$

In Step S9, the TFR selection unit 140 calculates the power resource amount "Power$_1$" used for transmission of the packet, with the power resource amount "Power$_0$" that can be used in the TTI, "CQI$_0$" and "CQI$_1$".

To be more specific, the TFR selection unit 140 calculates the power resource amount "Power$_1$" by using the following equation.

$$\text{Power}_1 = \text{Power}_0 - (\text{CQI}_0 - \text{CQI}_1) \times \alpha$$

Here, $\alpha$ is a predetermined constant.

In Step 510, the TFR selection unit 140 calculates the modulation scheme "Mod$_1$" and the code resource amount "Code$_1$" as the transmission method used for transmission of the packet in the TTI, with reference to the transmission format reference table, based on the code resource amount "Code$_0$" which can be used in the TTI and "CQI$_1$".

To be more specific, the TFR selection unit 140 calculates the modulation scheme "Mod$_1$" and the code resource amount "Code$_1$" by using the following equations.

$$\text{Mod}_1 = \text{TF\_Related\_Mod (Code}_0, \text{ CQI}_1)$$

$$\text{Code}_1 = \text{TF\_Related\_Code (Code}_0, \text{ CQI}_1)$$

Furthermore, the TFR selection unit 140 sets "TBS$_0$" to be the transport block size "TBS$_1$" as the transmission method used for transmission of the packet in the TTI.

Next, as shown in Fig. 9, in Step 511, the TBS reselection unit 180 acquires the transport block size "TBS$_1$," the code resource amount "Code$_1$" and the modulation scheme "Mod$_1$" from the transmission method (the transmission format and the transmission resources) determined by the TFR selection unit 140.

In Step S12, the TBS reselection unit 180 sets values of "TBS$_1$," "Code$_1$" and "Mod$_1$" to values of "TBS$_2$," "Code$_2$" and "Mod$_2$," respectively.

In Step S13, if "Mod$_1$" is "16QAM," the operation advances to Step S14, and, if not, the operation advances to Step S21.

In Step S14, the TBS reselection unit 180 calculates TFRI based on "TBS$_1$," "Code$_1$" and "Mod$_1$". Note that a relationship between the transport block size, the number of codes (the code resource amount), the modulation scheme and TFRI is defined in "3GPP TS25.321" as described above.

In Step S15, if TFRI is not "0" and at the same time, a coding rate is larger than a predetermined threshold CR$_{16QAM}$, the operation advances to Step S16, and, if not, the operation advances to Step S20.

Here, the coding rate means a ratio between the number of bits of a physical channel, which is obtained from the code resource amount (the number of codes) and the modulation scheme, and the transport block size. For example, when the transport block size is "$TBS_1$", the code resource amount (the number of codes) is "$Code_1$" and the modulation scheme is "16QAM", the coding rate becomes "$(TBS_1+24)/(Code_1 \times 1920)$". Here, "24" is a size of CRC bits, and "1920" is the number of bits per 1 code in one TTI (3 slots) when a spreading ratio is "16" and the modulation scheme is "16QAM".

In Step S16, if "$TBS_1$" is not less than the number of bits (data amount) obtained by adding the number of bits (data amount) in a header to the number of bits (data amount) in the packet (data) to be transmitted, the operation advances to Step S17, and, if not, the operation is finished. Here, the packet to be transmitted is a packet formed of one MAC-d PDU or more.

In Step S17, the TBS reselection unit 180 sets the value of "$TBS_1$" to be the value of "$TBS_2$," and calculates TFRI based on "$TBS_1$," "$Code_1$" and "$Mod_1$".

In Step S18, if the TFRI is not "0" and at the same time, the coding rate is larger than the predetermined threshold $CR_{16QAM}$, the operation advances to Step S19, and, if not, the operation advances to Step S20.

In Step S19, the TBS reselection unit 180 calculates a transport block size based on "$Code_1$," "$Mod_1$" and a value obtained by subtracting "1" from the TFRI, and sets the calculated transport block size to "$TBS_1$". Note that the relationship between the transport block size, the number of codes (the code resource amount), the modulation scheme and the TFRI is defined in "3GPP TS25.321" as described above.

In Step S20, the TBS reselection unit 180 sets "QPSK" to "$Mod_2$".

In Step S21, the TBS reselection unit 180 calculates TFRI based on "$Code_1$," "$Mod_2$" and "$TBS_2$".

In Step S22, if the TFRI is not "0," the operation advances to Step S23, and, if not, the operation advances to Step S24.

In Step S23, the TBS reselection unit 180 calculates a transport block size based on "$Code_1$," "$Mod_2$" and a value obtained by subtracting "1" from the TFRI, and sets the calculated transport block size to "$TBS_1$".

In Step S24, the TBS reselection unit 180 subtracts "1" from the value of "$Code_1$".

In Step S25, the TBS reselection unit 180 calculates TFRI based on "$Code_1$," "$Mod_2$" and "$TBS_2$". Moreover, the TBS reselection unit 180 calculates a transport block size based on "$Code_1$," "$Mod_2$" and a value obtained by subtracting "1" from the TFRI, and sets the calculated transport block size to "$TBS_1$".

In Step S26, if "$TBS_1$" is not less than the number of bits (data amount) obtained by adding the number of bits (data amount) in a header to the number of bits (data amount) in the packet (data) to be transmitted, the operation advances to Step S27, and, if not, the operation is finished. Here, the packet to be transmitted is a packet formed of one MAC-d PDU or more.

In Step S27, the TBS reselection unit 180 sets values of "$Code_1$" and "$TBS_1$" to values of "$Code_2$" and "$TBS_2$," respectively, and calculates TFRI based on "$Code_2$," "$Mod_2$" and "$TBS_2$".

In Step S28, if the TFRI is not "0," the operation advances to Step S29, and, if not, the operation advances to Step S30.

In Step S29, the TBS reselection unit 180 calculates a transport block size based on "$Code_1$," "$Mod_2$" and a value obtained by subtracting "1" from the TFRI, and sets the calculated transport block size to "$TBS_1$".

In Step S30, the TBS reselection unit 180 subtracts "1" from the value of "$Code_1$".

In Step S31, the TBS reselection unit 180 calculates TFRI based on "$Code_1$," "$Mod_2$" and "$TBS_2$". Moreover, the TBS reselection unit 180 calculates a transport block size based on "$Code_1$," "$Mod_2$" and a value obtained by subtracting "1" from the TFRI, and sets the calculated transport block size to "$TBS_1$".

(Effects of Mobile Communication System According to First Embodiment of the Invention)

The mobile communication system according to the first embodiment of the present invention enables to redetermine a transmission method so as to minimize a padding portion in a transport block, after the transmission method is determined as in the case of the mobile communication system according to the conventional technology. Thus, transmission of an unnecessary padding portion can be prevented, and a SIR for satisfying a required error rate is reduced. As a result, an error rate of downlink packets can be reduced.

(Modified Example 1)

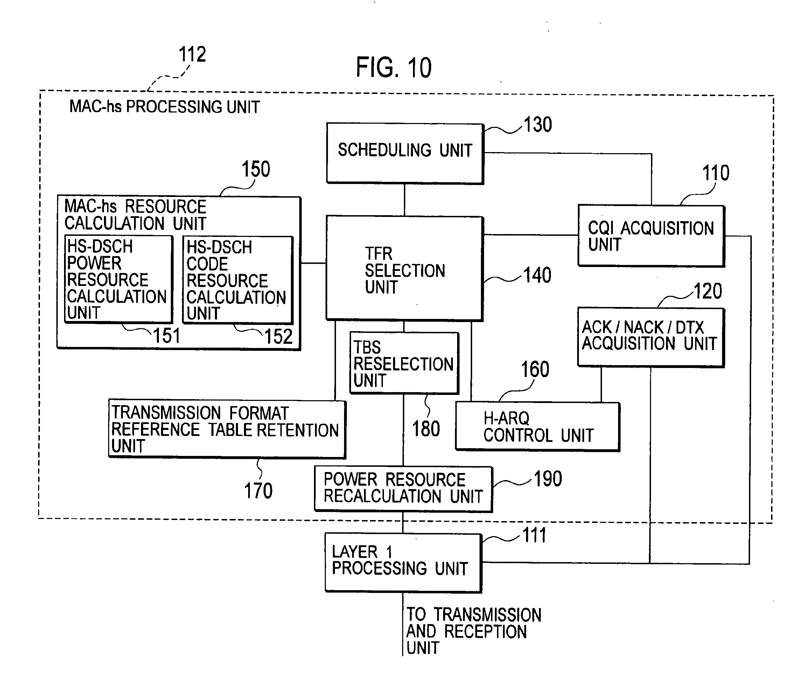

With reference to Fig. 10, modified example 1 of the present invention will be described. A mobile communication system according to modified example 1 is the same as the mobile communication system according to the first embodiment described above, except that a power resource recalculation unit 190 is provided in the MAC-hs processing unit 104 in the baseband signal processing unit 104 in the radio base station 100.

The power resource recalculation unit 190 is configured to change (reduce) power resources used for transmission of a packet, based on the transmission method (the transmission format and the transmission resources), which is determined by the TFR selection unit 140 and is used for transmission of a downlink packet, and the transmission method (the transmission format and the transmission resources), which is redetermined by the TBS reselection unit 180 and is used for transmission of the downlink packet.

Specifically, the power resource recalculation unit 190 obtains CQI corresponding to the transmission method (the transmission format and the transmission resources) which is redetermined by the TBS reselection unit 180, with a transmission format reference table retained by the transmission format reference table retention unit 170, after the redetermination processing by the TBS reselection unit 180.

To be more specific, the power resource recalculation unit 190 obtains minimum CQI which enables transmission of "$TBS_2$," with a function TF_Related_CQI (a code resource amount, a transport block size), based on "$Code_2$" and "$TBS_2$" obtained by the TBS reselection unit 180. Moreover, the power resource recalculation unit 190 sets a value of the obtained CQI to "$CQI_2$".

Thereafter, the power resource recalculation unit 190 calculates a power resource amount "$Power_2$" used for transmission of the downlink packet, according to the equation "$Power_2 = Power_2 + (CQI_2 - CQI_1) \times \beta$". Here, $\beta$ is a predetermined constant.

Note that "$CQI_2$" may be outputted not as an integer but as a real number. For example, when "$Code_2 = 4$" and "$TBS_2 = 4581$," the function TF_Related_CQI (the code resource amount, the transport block size) may output an intermediate value between "18" and "19" as the value of "$CQI_2$" with reference to Fig. 7 (a)

As a method for calculating the intermediate value, for example, a method for performing linear interpolation with an equation "$CQI_2 = 18 + (4581-4265)/(4748-4265) \times (19-18)$" is cited.

As described above, when the value of "$CQI_2$" is set not to an integer but to a real number, the power resources can be more finely changed (reduced).

The mobile communication system according to modified example 1 can increase transmission resources (radio resources) by reducing the power resources for the SIR for satisfying the reduced required error rate.

(Modified Example 2)

Moreover, the MAC-hs processing unit 112 may be formed of, for example, a CPU, a digital signal processor (DSP) or a programmable device capable of rewriting a program, such as a FPGA. Furthermore, a program for executing the processing described above may be stored in a predetermined memory area, and parameters ($\alpha$ and $CR_{16QAM}$) may be rewritten by downloading.

In this case, the MAC-hs processing unit 112 may be configured to download the parameters described above from an upper node of the radio base station 100. Alternatively, the MAC-hs processing unit 112 may be configured to read the parameters or the functions described above directly from a terminal I/F (an external interface function) provided in each of the TFR selection unit 140 and the TBS reselection unit 180.

Moreover, the respective functional blocks in the MAC-hs processing unit 112 may be divided with hardware or may be divided as software with programs on a processor.

Moreover, in the embodiment described above, the description was given of the HSDPA scheme that is a high-speed packet transmission scheme in the 3GPP. The present invention is not only limited to the HSDPA scheme but is also applicable to other high-speed packet transmission schemes for performing transmission control of downlink packets (particularly, the AMC scheme) in the mobile communication system.

For example, as the other high-speed packet transmission scheme, a high-speed packet transmission scheme, such as a 1xEV-DO scheme of the cdma 2000 scheme or a TDD scheme in the 3GPP2, and the like are cited.

Although the present invention has been described in detail above with the embodiment, it is apparent to those skilled in the art that the present invention is not limited to the embodiment described in the present application. The present invention can be implemented as altered and modified embodiments without departing from the spirit and scope of the present invention as defined by the description of claims. Therefore, the description of the present application is for illustrative purposes and is not intended to limit the present invention in any way.

INDUSTRIAL APPLICABILITY

As described above, according to the present invention, it is possible to provide a packet transmission control apparatus and a packet transmission control method, which enable transmission of downlink packets by efficiently using transmission resources (radio resources).

**Claims**

1. A packet transmission control apparatus for controlling transmission of a packet of a downlink to a plurality of mobile stations, comprising:

a storage unit configured to store a transmission resource usable for transmission of the packet, channel quality information on the downlink, and a transmission method used for transmission of the packet in association with each other;
a determination unit configured to determine the transmission method used for transmission of the packet with reference to the storage unit based on the channel quality information on the downlink reported from a mobile station and the transmission resource usable for transmission of the packet;
a redetermination unit configured to redetermine the transmission method used for transmission of the packet so as to minimize a padding portion in a transport block that forms the packet; and
a packet transmission unit configured to transmit the packet with the redetermined transmission method.

2. The packet transmission control apparatus according to claim 1, wherein
the determination unit is configured to determine, as the transmission method, a transport block size used for transmission of the packet, and
the redetermination unit is configured to reduce the transport block size determined by the determination unit until the padding portion in the transport block is minimized.

3. The packet transmission control apparatus according to claim 1, wherein
the determination unit is configured to determine, as the transmission method, a modulation scheme used for transmission of the packet, and
the redetermination unit is configured to change the modulation scheme from a 16QAM scheme to a QPSK scheme in the case where the modulation scheme determined by the determination unit is the 16QAM scheme and at the same time, in the case where a coding rate becomes smaller than a predetermined value when the transport block size is reduced.

4. The packet transmission control apparatus according to claim 1, wherein
the determination unit is configured to determine, as the transmission method, a transport block size, a modulation scheme and a code resource amount, which are used for transmission of the packet, and
the redetermination unit is configured to reduce the code resource amount in the case where the modulation scheme determined by the determination unit is a QPSK scheme and at the same time, in the case where the transport block size determined by the determination unit is the same as a transmittable minimum transport block size with the code resource amount determined by the determination unit.

5. The packet transmission control apparatus according to claim 1, further comprising:

a power resource changing unit configured to change a power resource used for transmission of the packet, in accordance with the transmission method determined by the determination unit and with the transmission method redetermined by the redetermination unit.

6. A packet transmission control method for controlling transmission of a packet of a downlink to a plurality of mobile stations, comprising the steps of:

storing a transmission resource usable for transmission of the packet, channel quality information on the downlink, and a transmission method used for transmission of the packet in association with each other;
determining the transmission method used for transmission of the packet with reference to the storage unit, based on the channel quality information on the downlink reported from a mobile station and the transmission resource usable for transmission of the packet;
redetermining the transmission method used for transmission of the packet so as to minimize a padding portion in a transport block that forms the packet; and
transmitting the packet with the redetermined transmission method.

# FIG. 1

TRANSPORT BLOCK SIZE (bits)

PROTOCOL DATA UNIT

PADDING PORTION

MAC-d PDU

MAC-d PDU

MAC-d PDU

MAC-d PDU SIZE (bits)

HEADER

# FIG. 2

MOBILE STATION #3

11

DOWNLINK
SHARED
CHANNEL

ASSOCIATED DEDICATED
CHANNEL #3

DEDICATED PHYSICAL
CONTROL CHANNEL
FOR HSDPA #3

ASSOCIATED
DEDICATED
CHANNEL #1

RADIO
BASE
STATION

100

ASSOCIATED
DEDICATED
CHANNEL #2

DOWNLINK
SHARED
CHANNEL

10

DOWNLINK
SHARED
CHANNEL

DEDICATED
PHYSICAL
CONTROL
CHANNEL
FOR HSDPA #1

DEDICATED
PHYSICAL
CONTROL
CHANNEL
FOR HSDPA #2

12

MOBILE
STATION #1

MOBILE
STATION #2

# FIG. 3

TRANSMITTING
AND RECEIVING
ANTENNA

104  100  103  102  101

RADIO BASE STATION

TO RADIO
NETWORK
CONTROLLER

| TRANSMISSION LINE INTERFACE | BASEBAND SIGNAL PROCESSING UNIT | TRANSMISSION AND RECEPTION UNIT | AMPLIFIER UNIT |

106

CALL
PROCESSING
UNIT

105

# FIG. 4

104

BASEBAND SIGNAL PROCESSING UNIT

TO
TRANSMISSION
LINE INTERFACE

TO
TRANSMISSION
AND RECEPTION
UNIT

| MAC-hs PROCESSING UNIT | LAYER 1 PROCESSING UNIT |

112                              111

CALL
PROCESSING
UNIT

105

# FIG. 5

112

MAC-hs PROCESSING UNIT

SCHEDULING UNIT 130

150

MAC-hs RESOURCE CALCULATION UNIT

| HS-DSCH POWER RESOURCE CALCULATION UNIT | HS-DSCH CODE RESOURCE CALCULATION UNIT |

151 152

TFR SELECTION UNIT 140

CQI ACQUISITION UNIT 110

ACK / NACK / DTX ACQUISITION UNIT 120

TBS RESELECTION UNIT

170

TRANSMISSION FORMAT REFERENCE TABLE RETENTION UNIT

180

160

H-ARQ CONTROL UNIT

LAYER 1 PROCESSING UNIT 111

TO TRANSMISSION AND RECEPTION UNIT

EP 1 811 702 A1

# FIG. 6

| PROCESS# | 1 | 2 | 3 | 4 | 1 | 2 | 3 |
|---|---|---|---|---|---|---|---|
| TRANSMISSION SIDE | PACKET #1 | PACKET #2 | PACKET #3 | PACKET #4 | PACKET #1 | PACKET #5 | PACKET #6 |

Nack    Ack    Ack    Nack    Ack

| RECEPTION SIDE | PACKET #1 | PACKET #2 | PACKET #3 | PACKET #4 | PACKET #1 | PACKET #6 |
|---|---|---|---|---|---|---|
| | NG | OK | OK | NG | OK | NG |

EP 1 811 702 A1

## FIG. 7A

| CQI | TRANSPORT BLOCK SIZE | CODE RESOURCE AMOUNT | MODULATION SCHEME | OFFSET VALUE OF POWER RESOURCE AMOUNT |
|---|---|---|---|---|
| 1 | 137 | 1 | QPSK | 0 |
| 2 | 173 | 1 | QPSK | 0 |
| 3 | 233 | 1 | QPSK | 0 |
| 4 | 317 | 1 | QPSK | 0 |
| 5 | 377 | 1 | QPSK | 0 |
| 6 | 461 | 1 | QPSK | 0 |
| 7 | 650 | 2 | QPSK | 0 |
| 8 | 792 | 2 | QPSK | 0 |
| 9 | 1036 | 3 | QPSK | 0 |
| 10 | 1356 | 4 | QPSK | 0 |
| 11 | 1621 | 4 | QPSK | 0 |
| 12 | 1939 | 4 | QPSK | 0 |
| 13 | 2279 | 4 | QPSK | 0 |
| 14 | 2583 | 4 | QPSK | 0 |
| 15 | 2876 | 4 | 16QAM | 0 |
| 16 | 3319 | 4 | 16QAM | 0 |
| 17 | 3830 | 4 | 16QAM | 0 |
| 18 | 4265 | 4 | 16QAM | 0 |
| 19 | 4748 | 4 | 16QAM | 0 |
| 20 | 5193 | 4 | 16QAM | 0 |
| 21 | 5680 | 4 | 16QAM | 0 |
| 22 | 5680 | 4 | 16QAM | -1 |
| 23 | 5680 | 4 | 16QAM | -2 |
| 24 | 5680 | 4 | 16QAM | -3 |
| 25 | 5680 | 4 | 16QAM | -4 |
| 26 | 5680 | 4 | 16QAM | -5 |
| 27 | 5680 | 4 | 16QAM | -6 |
| 28 | 5680 | 4 | 16QAM | -7 |
| 29 | 5680 | 4 | 16QAM | -8 |
| 30 | 5680 | 4 | 16QAM | -9 |

## FIG. 7B

| CQI | TRANSPORT BLOCK SIZE | CODE RESOURCE AMOUNT | MODULATION SCHEME | OFFSET VALUE OF POWER RESOURCE AMOUNT |
|---|---|---|---|---|
| 1 | 137 | 1 | QPSK | 0 |
| 2 | 173 | 1 | QPSK | 0 |
| 3 | 233 | 1 | QPSK | 0 |
| 4 | 317 | 1 | QPSK | 0 |
| 5 | 377 | 1 | QPSK | 0 |
| 6 | 461 | 1 | QPSK | 0 |
| 7 | 650 | 2 | QPSK | 0 |
| 8 | 792 | 2 | QPSK | 0 |
| 9 | 1036 | 3 | QPSK | 0 |
| 10 | 1356 | 4 | QPSK | 0 |
| 11 | 1681 | 5 | QPSK | 0 |
| 12 | 2046 | 5 | QPSK | 0 |
| 13 | 2404 | 5 | QPSK | 0 |
| 14 | 2876 | 5 | QPSK | 0 |
| 15 | 3260 | 5 | QPSK | 0 |
| 16 | 3630 | 5 | 16QAM | 0 |
| 17 | 4189 | 5 | 16QAM | 0 |
| 18 | 4664 | 5 | 16QAM | 0 |
| 19 | 5287 | 5 | 16QAM | 0 |
| 20 | 5887 | 5 | 16QAM | 0 |
| 21 | 6554 | 5 | 16QAM | 0 |
| 22 | 7168 | 5 | 16QAM | 0 |
| 23 | 7168 | 5 | 16QAM | -1 |
| 24 | 7168 | 5 | 16QAM | -2 |
| 25 | 7168 | 5 | 16QAM | -3 |
| 26 | 7168 | 5 | 16QAM | -4 |
| 27 | 7168 | 5 | 16QAM | -5 |
| 28 | 7168 | 5 | 16QAM | -6 |
| 29 | 7168 | 5 | 16QAM | -7 |
| 30 | 7168 | 5 | 16QAM | -8 |

EP 1 811 702 A1

## FIG. 8

EP 1 811 702 A1

START

$\downarrow$

ACQUIRE $Code_0$, $Power_0$ AND $CQI_0$  ~S1

$\downarrow$

S2

(CODE RESOURCE AMOUNT
$Code_0 >$ THAT CAN BE RECEIVED BY
THE MOBILE STATION)?

NO $\leftarrow$

$\downarrow$ YES

$Code_0 =$ (CODE RESOURCE AMOUNT THAT CAN
BE RECEIVED BY THE MOBILE STATION)  ~S3

$\downarrow$

$CQI_0 = CQI_0 + Power_0 - Power_{Default}$  ~S4

$\downarrow$

$TBS_0 = TF\_Related\_TBS$ ($Code_0$ AND $CQI_0$)  ~S5

$\downarrow$

S6

(DATA AMOUNT
OF PACKET TO BE TRANSMITTED)
$\geq TBS_0$ ?

NO $\leftarrow$

$\downarrow$ YES

$CQI_1 = TF\_Related\_CQI$ ($Code_0$, (MINIMUM
TRANSPORT BLOCK SIZE WHICH ENABLES
TRANSMISSION OF PACKET TO BE TRANSMITTED))  ~S8

$\downarrow$

$Power_1 = Power_0 - (CQI_0 - CQI_1) \times \alpha$  ~S9

$\downarrow$

$Mod_1 = TF\_Related\_Mod$ ($Code_0$, $CQI_1$)
$Code_1 = TF\_Related\_Code$ ($Code_0$, $CQI_1$)
$TBS_1 = TBS_0$  ~S10

$CQI_1 = CQI_0$
$Power_1 = Power_0 + TF\_Related\_Offset$ ($Code_0$, $CQI_1$)
$Mod_1 = TF\_Related\_Mod$ ($Code_0$, $CQI_1$)
$Code_1 = TF\_Related\_Code$ ($Code_0$, $CQI_1$)
$TBS_1 = TBS_0$  ~S7

$\downarrow$

TBS RESELECTION PROCESSING (NEXT PAGE)

$\downarrow$

END

## FIG. 9

S21 — OBTAIN TFRI FROM VALUES OF $Code_1$, $Mod_2$ AND $TBS_2$

S22 — TFRI IS NOT 0?

S24 — NO — $Code_1 = Code_1 - 1$

S23 — YES — $TBS_1$ = TRANSPORT BLOCK SIZE OBTAINED FROM ($Code_1$, $Mod_2$ AND (TFRI-1))

S25 — OBTAIN TFRI FROM VALUES OF $Code_1$, $Mod_2$ AND $TBS_2$ $TBS_1$= TRANSPORT BLOCK SIZE OBTAINED FROM ($Code_1$, $Mod_2$ AND (TFRI-1))

S26 — $TBS_1 \geqq$ DATA+HEADER? — NO

S27 — YES — $Code_2 = Code_1$, $TBS_2 = TBS_1$ OBTAIN TFRI FROM VALUES OF $Code_2$, $Mod_2$ AND $TBS_2$

S28 — TFRI IS NOT 0?

S30 — NO — $Code_1 = Code_1 - 1$

S29 — YES — $TBS_1$ = TRANSPORT BLOCK SIZE OBTAINED FROM ($Code_1$, $Mod_2$ AND (TFRI-1))

S31 — OBTAIN TFRI FROM VALUES OF $Code_1$, $Mod_2$ AND $TBS_2$ $TBS_1$= TRANSPORT BLOCK SIZE OBTAINED FROM ($Code_1$, $Mod_2$ AND (TFRI-1))

START

S11 — ACQUIRE $TBS_1$, $Code_1$ AND $Mod_1$

S12 — $Code_2 = Code_1$, $TBS_2 = TBS_1$, $Mod_2 = Mod_1$

S13 — $Mod_1 ==$ 16QAM? — NO

S14 — YES — OBTAIN TFRI FROM VALUES OF $Code_1$, $Mod_1$ AND $TBS_1$

S15 — TFRI IS NOT 0? AND $TBS_1 >$ ($CR_{16QAM} \times Code_1 \times 1920-24$)? — NO

S16 — YES — $TBS_1 \geqq$ DATA+HEADER? — NO

S17 — YES — $TBS_2 = TBS_1$ OBTAIN TFRI FROM VALUES OF $Code_1$, $Mod_1$ AND $TBS_1$

S18 — VALUE OF TFRI IS NOT 0? AND $TBS_1 >$ ($CR_{16QAM} \times Code_1 \times 1920-4$)? — NO

S19 — YES — $TBS_1$ = TRANSPORT BLOCK SIZE OBTAINED FROM ($Code_1$, $Mod_1$ AND (TFRI-1))

S20 — NO — $Mod_2$ = QPSK

END

EP 1 811 702 A1

# FIG. 10

MAC-hs PROCESSING UNIT  112

SCHEDULING UNIT  130

MAC-hs RESOURCE CALCULATION UNIT  150

HS-DSCH POWER RESOURCE CALCULATION UNIT  151

HS-DSCH CODE RESOURCE CALCULATION UNIT  152

TFR SELECTION UNIT  140

CQI ACQUISITION UNIT  110

ACK / NACK / DTX ACQUISITION UNIT  120

TBS RESELECTION UNIT  180

H-ARQ CONTROL UNIT  160

TRANSMISSION FORMAT REFERENCE TABLE RETENTION UNIT  170

POWER RESOURCE RECALCULATION UNIT  190

LAYER 1 PROCESSING UNIT  111

TO TRANSMISSION AND RECEPTION UNIT

EP 1 811 702 A1

<div align="center">

**INTERNATIONAL SEARCH REPORT**

</div>

| | International application No. |
|---|---|
| | PCT/JP2005/019017 |

**A. CLASSIFICATION OF SUBJECT MATTER**
*H04J13/00*(2006.01), *H04B7/26*(2006.01), *H04L12/28*(2006.01), *H04L29/06* (2006.01), *H04Q7/38*(2006.01)

According to International Patent Classification (IPC) or to both national classification and IPC

**B. FIELDS SEARCHED**

Minimum documentation searched (classification system followed by classification symbols)
*H04J13/00*(2006.01), *H04B7/26*(2006.01), *H04L12/28*(2006.01), *H04L29/06* (2006.01), *H04Q7/38*(2006.01)

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2004-200923 A (NTT Docomo Inc.), 15 July, 2004 (15.07.04), Par. Nos. [0020] to [0040]; Figs. 1 to 3, 8 & CN 1509028 A & US 2004/0184417 A1 & EP 1432166 A2 | 1-6 |
| Y | JP 2004-173019 A (Matsushita Electric Industrial Co., Ltd.), 17 June, 2004 (17.06.04), Par. Nos. [0044] to [0096], [0121] to [0124]; Figs. 1, 6, 8, 16 & EP 1513272 A1 & US 2005/0208973 A1 & WO 2004/047336 A1 | 1-6 |

☐ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 December, 2005 (28.12.05) | 17 January, 2006 (17.01.06) |

| Name and mailing address of the ISA/ | Authorized officer |
|---|---|
| Japanese Patent Office | |
| Facsimile No. | Telephone No. |

Form PCT/ISA/210 (second sheet) (April 2005)